Europäisches Patentamt

European Patent Office

Office européen des brevets

(19)

(11) EP 0 774 545 B1

(12) **FASCICULE DE BREVET EUROPEEN**

(45) Date de publication et mention
de la délivrance du brevet:
**24.01.2001 Bulletin 2001/04**

(51) Int Cl.⁷: **E02F 3/84**, G05D 1/03

(21) Numéro de dépôt: **96402354.3**

(22) Date de dépôt: **06.11.1996**

(54) **Procédé et dispositif pour ajuster la position transversale d'un engin mobile**

Verfahren und Vorrichtung zum Einstellen der transversalen Position einer fahrbaren Baumaschine

Method and apparatus for adjusting the transverse position of a mobile construction machine

(84) Etats contractants désignés:
**CH DE GB IT LI**

(30) Priorité: **14.11.1995 FR 9513461**

(43) Date de publication de la demande:
**21.05.1997 Bulletin 1997/21**

(73) Titulaire: **COMPAGNIE INDUSTRIELLE DES
LASERS CILAS
F-91460 Marcoussis (FR)**

(72) Inventeurs:
• **Cornillault, Jean
91620 Nozay (FR)**
• **Duvent, Jean-Louis
91160 Longjumeau (FR)**
• **Potier, Jean-Pierre
92500 Rueil-Malmaison (FR)**
• **Tabaillon, Christian
42410 Pelussin (FR)**

(74) Mandataire: **Bonnetat, Christian
CABINET BONNETAT
29, rue de St. Pétersbourg
75008 Paris (FR)**

(56) Documents cités:
**DE-A- 4 318 798          FR-A- 2 637 625
FR-A- 2 687 808          GB-A- 2 143 969**

• **PROCEEDINGS OF THE INTERNATIONAL
CONFERENCE ON ROBOTICS AND AUTOMAT,
NICE, MAY 12 - 14, 1992, vol. VOL. 3, no. CONF.
8, 12 Mai 1992, INSTITUTE OF ELECTRICAL AND
ELECTRONICS ENGINEERS, pages 2594-2599,
XP000300136 LE CORRE J F ET AL: "REAL TIME
DETERMINATION OF THE LOCATION AND
SPEED OF MOBILE ROBOTS RUNNING ON
NON-PLANAR SURFACES"**
• **PATENT ABSTRACTS OF JAPAN vol. 7, no. 164
(P-211) & JP 58 072212 A (KOMATSU
SEISAKUSHO KK), 30 Avril 1983,**
• **PROCEEDINGS OF THE MEDITERANNEAN
ELECTROTECHNICAL CONFERENCE,
LJUBLJANA, MAY 22 - 24, 1991, vol. 2, 22 Mai
1991, ZAJC B;SOLINA F, pages 1242-1245,
XP000289637 MARAVALL D ET AL: "RANGE
COMPUTATION FOR A MOBILE ROBOT USING
STEREOSCOPIC VISION"**

EP 0 774 545 B1

## Description

La présente invention concerne un procédé et un dispositif pour ajuster la position transversale d'au moins une partie d'un engin mobile destiné à réaliser un ouvrage sur un terrain et se déplaçant à cet effet sur ledit terrain suivant une trajectoire déterminée.

Par position transversale d'un engin mobile ou d'une partie d'un engin mobile, on entend dans le cadre de la présente invention la position dudit engin ou de ladite partie dans le plan transversal au déplacement de l'engin.

Quoique non exclusivement, la présente invention s'applique plus particulièrement à l'ajustement de la position transversale d'engins mobiles utilisés sur les chantiers de travaux publics et destinés à la réalisation d'ouvrages. Par ouvrage, on entend dans le cadre de la présente invention toute réalisation susceptible d'être effectuée sur un terrain par transformation ou non dudit terrain, comme par exemple la mise en place d'un revêtement sur une route ou sur une piste d'atterrissage d'un aéroport ou le creusement d'un fossé.

Les engins utilisés à cet effet doivent le plus souvent être dirigés suivant une trajectoire prédéfinie dans un référentiel géodésique. Afin de pouvoir réaliser alors ledit ouvrage conformément à un projet préétabli, il est nécessaire que ledit engin ou au moins une partie dudit engin, à savoir généralement la partie dudit engin destinée à réaliser l'ouvrage, présente, au cours du déplacement de l'engin, une position transversale appropriée.

Généralement, la trajectoire à suivre est matérialisée par un fil tendu porté par des piquets fixés au sol, en nombre élevé, et l'engin est muni de palpeurs mécaniques qui restent en contact permanent avec ledit fil et qui signalent toute variation de position de l'engin par rapport à la position prescrite indiquée par ledit fil, ce qui permet d'ajuster la position transversale de l'engin en le commandant de manière à supprimer toute variation de position qui apparaît.

Ainsi, ledit fil aménagé sur le sol à une hauteur définie et suivant une trajectoire déterminée permet, d'une part, de faire suivre à l'engin ladite trajectoire déterminée et, d'autre part, d'ajuster au cours du déplacement la position transversale de l'engin.

Cette méthode d'ajustement de la position transversale présente de nombreux inconvénients, et en particulier :

- un coût d'exploitation élevé dû à l'installation du fil et des piquets portant ledit fil ;
- une gêne occasionnée par ledit fil tendu au-dessus du sol ; et
- l'impossibilité de faire prendre à l'engin une position transversale différente de celle définie par le fil tendu.

Par ailleurs, par le brevet français FR-A-2 637 625, on connaît déjà un procédé pour ajuster la position transversale d'au moins une partie d'un engin mobile destiné à réaliser un ouvrage sur un terrain et se déplaçant à cet effet sur ledit terrain suivant une trajectoire déterminée, procédé selon lequel :

    A/ on détermine une position transversale théorique de ladite partie de l'engin ; et
    B/ au cours dudit déplacement suivant ladite trajectoire déterminée, on ajuste la position transversale de ladite partie de l'engin en effectuant de façon répétitive les opérations suivantes :

- on détecte la position transversale effective de ladite partie de l'engin ; et
- on commande ladite partie de l'engin de manière que sa position transversale effective corresponde à la position transversale théorique déterminée.

La présente invention a pour objet de perfectionner le procédé ci-dessus et elle concerne un procédé et un dispositif d'ajustement de la position transversale d'au moins une partie d'un engin mobile ne nécessitant pour sa mise en oeuvre aucun contact mécanique avec un fil ou avec tout autre moyen d'asservissement fixé sur le sol et susceptible d'être gênant.

Par le document GB-2 228 507, on connaît un appareil de commande pour une machine destinée au déblaiement d'un terrain et comportant un émetteur laser agencé à poste fixe sur le sol et émettant un faisceau laser susceptible d'être détecté par des capteurs installés sur la machine, ledit faisceau laser émis définissant une ligne fixe fictive déterminant la trajectoire à suivre par la machine et servant de référence pour l'asservissement d'un organe de déblaiement de ladite machine dans un plan transversal à ladite ligne fictive.

La méthode proposée par ce document présente toutefois quelques inconvénients importants. D'une part, il est nécessaire d'agencer à poste fixe un émetteur laser, ce qui peut évidemment poser des problèmes lorsque les conditions météorologiques sont défavorables, d'autant plus qu'un tel émetteur est généralement réalisé à partir de composants relativement fragiles.

D'autre part, l'ajustement de la position transversale n'est pas effectué par rapport au sol mais par rapport à la ligne fictive définie par ledit faisceau laser émis. Ceci ne pose certes pas de problème pour le déblaiement envisagé dans ledit document précité, mais ce mode d'ajustement peut au contraire être difficilement mis en oeuvre lorsque l'on envisage de réaliser un ouvrage présentant une forme particulière dépendant du profil du terrain, puisque la forme du terrain n'est pas connue dans ce cas. Or, en particulier sur les chantiers de travaux publics, de très nombreux ouvrages et travaux sont réalisés en dépendance du profil du terrain considéré, ce qui exclut l'utilisation de la solution préconisée par le document GB-2 228 507.

La présente invention a également pour objet de remédier à ces inconvénients. Elle concerne un procédé pour ajuster la position transversale d'au moins une partie d'un engin mobile destiné à se déplacer sur un terrain pour réaliser un ouvrage, la mise en oeuvre de cet ajustement ne nécessitant aucun contact avec des éléments agencés sur le sol tout en tenant compte de la forme du terrain.

A cette fin, selon l'invention, le procédé du type rappelé ci-dessus est remarquable en ce que, dans l'étape A/ :

a) on relève à distance le profil dudit terrain ;
b) à partir de l'ouvrage que l'on envisage de réaliser et dudit profil relevé, on détermine la position transversale théorique que doit prendre ladite partie de l'engin lors de la réalisation dudit ouvrage au cours du déplacement dudit engin suivant ladite trajectoire déterminée.

Ainsi, l'ajustement de la position transversale de ladite partie de l'engin est effectué en dépendance du profil du terrain et non par rapport à une ligne fictive, comme dans le document précité GB-2 228 507, ce qui permet de remédier aux inconvénients mentionnés précédemment.

De plus, selon l'invention, les opérations a) et b) du procédé conforme à l'invention peuvent être effectuées, soit lors d'une étape préliminaire avant le déplacement de l'engin, soit au cours dudit déplacement.

De façon avantageuse, pour relever à distance le profil du terrain, on détermine à distance dans un référentiel déterminé les coordonnées d'une pluralité de points de mesure dudit terrain et, de préférence, pour déterminer à distance les coordonnées d'un point de mesure du terrain dans un référentiel déterminé :

a) on définit un point, dont les coordonnées sont connues dans ledit référentiel, comme point de référence ;
b) on détermine la distance D entre ledit point de mesure et ledit point de référence ;
c) on détermine l'angle $\phi$ que fait avec la verticale la droite passant par ledit point de mesure et ledit point de référence ;
d) on détermine l'angle $\alpha$ que fait avec une direction horizontale déterminée, dont les coordonnées sont connues dans ledit référentiel, la projection dans le plan horizontal de la droite passant par ledit point de mesure et ledit point de référence ; et
e) à partir des coordonnées dudit point de référence, de ladite distance D et desdits angles $\phi$ et $\alpha$, on détermine les coordonnées du point de mesure dans ledit référentiel.

Avantageusement, pour relever le profil du terrain et/ou pour détecter la position transversale effective de l'engin, on dispose sur ledit terrain un élément de matérialisation pouvant par exemple être détecté à distance.

De façon avantageuse, pour faciliter la mise en oeuvre du procédé conforme à l'invention, ledit élément de matérialisation peut comporter une bande longitudinale réfléchissante, ainsi que des cibles réfléchissantes et des repères agencés respectivement à équidistance le long de ladite bande longitudinale, latéralement à celle-ci, ladite bande longitudinale facilitant la détermination de la position transversale effective de l'engin, lesdites cibles facilitant le relevé de points du terrain et lesdits repères permettant de déterminer l'avance de l'engin, tel que décrit ci-après.

La présente invention concerne également un dispositif pour la mise en oeuvre du procédé précité et destiné à être monté sur ledit engin.

Selon l'invention, ledit dispositif est remarquable en ce qu'il comporte :

- un dispositif de mesure susceptible d'effectuer à distance des mesures relatives à des points de mesure (P) du terrain permettant de déterminer la position transversale théorique de ladite partie de l'engin ;
- au moins un capteur susceptible d'effectuer des mesures permettant de déterminer la position transversale effective de ladite partie de l'engin ;
- des moyens de positionnement susceptibles d'effectuer le positionnement transversal de ladite partie de l'engin ; et
- un calculateur relié audit dispositif de mesure , audit capteur et auxdits moyens de positionnement et susceptible de commander les moyens de positionnement de manière à faire correspondre la position transversale effective de ladite partie de l'engin avec la position transversale théorique, au cours du déplacement de l'engin,

ledit calculateur connaît la configuration de l'ouvrage que l'on envisage de réaliser et est formé de manière à déterminer :

- à partir des mesures effectuées par ledit capteur la position transversale effective de ladite partie de l'engin ;
- à partir des mesures effectuées par ledit dispositif de mesure , les coordonnées (x,y,z) dans un référentiel déterminé (OXYZ) desdits points de mesure (P) ;
- à partir desdites coordonnées (x,y,z) des points de mesure (P), le profil dudit terrain et
- à partir de ladite configuration de l'ouvrage et dudit profil du terrain, la position transversale théorique que doit prendre ladite partie de l'engin lors de la réalisation dudit ouvrage au cours du déplacement dudit engin suivant ladite trajectoire déterminée.

De façon avantageuse, ledit dispositif de mesure comporte un télémètre réalisé de préférence sous forme d'un télémètre optique à rayonnement laser et au moins un goniomètre.

De plus, avantageusement, ledit télémètre et ledit goniomètre sont montés sur une plate-forme mobile commandée par ledit calculateur.

Selon un mode de réalisation possible, ladite plate-forme est réalisée de façon à être orientable en site et fixe en gisement. Il est alors nécessaire de prévoir un télémètre actif sur une largeur en gisement importante pour palier cette immobilité en gisement.

Toutefois, de préférence, ladite plate-forme est orientable à la fois en site et en gisement, ce qui permet d'analyser une partie de terrain aussi large que nécessaire.

Par ailleurs, de façon avantageuse, ledit capteur coopère avec un élément de matérialisation tel que décrit précédemment disposé sur ledit terrain et il comporte une caméra vidéo, comportant par exemple un capteur présentant une matrice photoréceptrice, susceptible d'observer ledit élément de matérialisation et de déterminer en fonction de cette observation la position effective de ladite partie de l'engin.

Dans ce mode de réalisation, ledit élément de matérialisation peut être particulièrement simple et être constitué, par exemple, par une unique bande diffusante et/ou réfléchissante.

Dans une variante de réalisation, ledit capteur comporte :

-  une source laser susceptible d'émettre un faisceau laser ; et
-  une caméra vidéo, comportant par exemple un capteur présentant une matrice photoréceptrice, susceptible de détecter le faisceau laser émis par ladite source laser et réfléchi par ledit élément de matérialisation et de déterminer en fonction de cette détection la position effective de ladite partie de l'engin.

En outre, avantageusement, le faisceau laser est émis de manière à présenter un plan perpendiculaire à une bande longitudinale réfléchissante agencée sur ledit élément de matérialisation.

Par ailleurs, dans un mode de réalisation préféré, les moyens de positionnement comportent de façon avantageuse des vérins agencés sur l'engin et susceptibles de régler la position transversale de ladite partie de l'engin, c'est-à-dire la position en hauteur et latéralement à la direction d'avance dudit engin.

Les figures du dessin annexé feront bien comprendre comment l'invention peut être réalisée. Sur ces figures, des références identiques désignent des éléments semblables.

La figure 1 montre en vue latérale schématique un engin mobile disposé sur un terrain et muni d'un dispositif conforme à l'invention.

La figure 2 est une vue schématique de dessus de l'engin de la figure 1.

La figure 3 est le schéma synoptique d'un dispositif conforme à l'invention.

La figure 4 illustre de façon schématique le principe de mesure utilisé pour déterminer la position transversale effective de l'engin.

La figure 5 est une vue partielle en perspective d'un élément de matérialisation utilisé lors de la mise en oeuvre de l'invention.

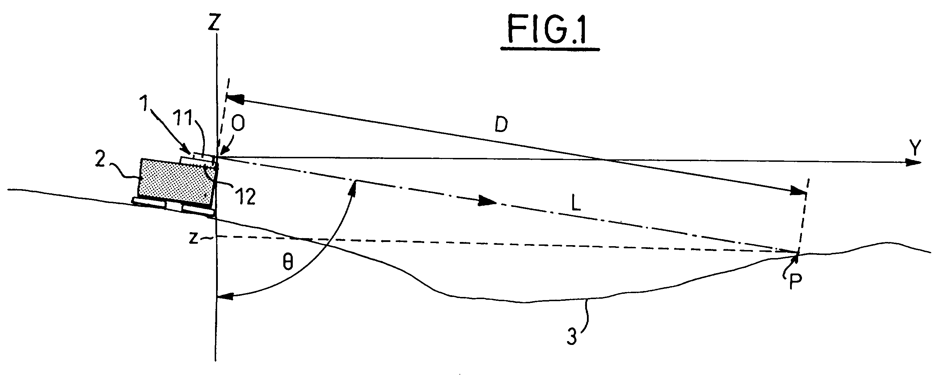

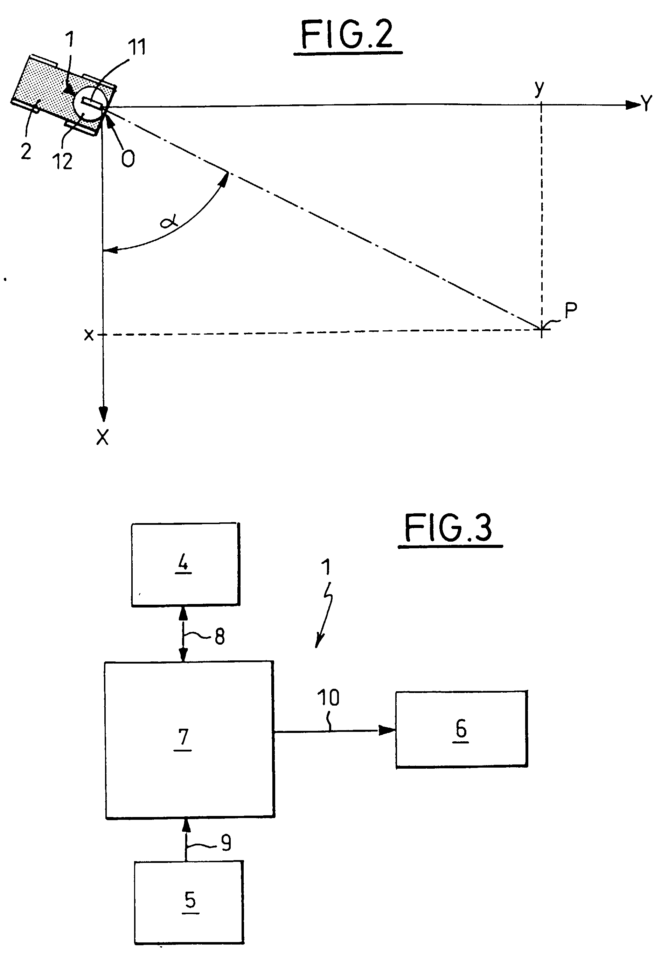

Le dispositif 1 conforme à l'invention est monté sur un engin mobile 2, par exemple un engin de travaux publics, représenté schématiquement sur les figures 1 et 2.

Ledit dispositif 1 est destiné à ajuster la position transversale de l'engin 2 au cours du déplacement de ce dernier suivant une trajectoire déterminée non représentée sur un terrain 3, pour permettre audit engin 2 de réaliser sur ledit terrain un ouvrage non représenté, conformément à un projet préétabli, par transformation ou non dudit terrain. Bien que cela ne soit pas le cas dans l'exemple représenté, le dispositif conforme à l'invention peut également être utilisé pour ajuster seulement une partie de l'engin, par exemple une pelle de déblaiement ou un organe de creusement. En ce qui concerne l'ouvrage à réaliser, il peut s'agir par exemple d'un simple travail de terrassement, de l'aménagement d'un bord de route ou de la réalisation d'une piste d'atterrissage. Toutefois, bien qu'elle soit plus particulièrement appropriée à la commande d'engins de travaux publics, la présente invention ne se limite évidemment pas à la seule commande de tels engins de travaux publics. Elle peut en effet être mise en oeuvre dans des domaines d'activité variés.

L'ajustement de la position transversale est réalisé en effectuant des mesures dans un référentiel fixe OXYZ. Il peut s'agir d'un référentiel géodésique ou d'un référentiel lié à l'engin 2. Cette dernière solution est particulièrement intéressante d'un point de vue pratique lorsque les mesures sont effectuées avant le déplacement dudit engin, comme cela est envisagé dans le présent exemple. A cet effet, selon l'invention, le dispositif 1 représenté schématiquement sur la figure 3 comporte :

-  un dispositif de mesure 4 susceptible d'effectuer des mesures permettant de calculer dans ledit référentiel OXYZ les coordonnées (x, y, z) de points P du terrain 3 ;
-  au moins un capteur 5 susceptible d'effectuer des mesures permettant de déterminer la position transversale effective de l'engin 2 dans ledit référentiel OXYZ ;
-  des moyens de positionnement 6 susceptibles de modifier la position transversale de l'engin 2 ; et
-  un calculateur 7 relié audit dispositif de mesure 4, audit capteur 5 et auxdits moyens de positionnement 6, respectivement par l'intermédiaire de liaisons 8, 9 et 10, dont on présentera les fonctions ci-après.

Ledit dispositif de mesure 4 comporte un télémètre 11, de préférence à laser, du type connu, monté sur une plate-forme mobile 12 agencée sur l'engin 2. Le point O du référentiel OXYZ est situé au point utilisé comme point de référence par ledit télémètre 11 pour la mesure de distance et OZ correspond à la verticale et OX et OZ à deux directions horizontales orthogonales entre elles.

Ladite plate-forme mobile 12 est commandée par ledit calculateur 7 et elle est orientable en site et en gisement, par l'intermédiaire d'un moyen d'entraînement spécifique non représenté. Le mouvement de ladite plate-forme peut également être mis en oeuvre, selon un autre mode de réalisation, par l'intermédiaire de moyens d'entraînement existant déjà sur l'engin.

Ledit télémètre 11 est susceptible de mesurer la distance D entre ledit point O et un point P quelconque du terrain, en émettant à cet effet un faisceau laser L vers ledit point P, tel que représenté schématiquement sur les figures 1 et 2. A cet effet, ledit faisceau laser L est réfléchi audit point P, comme décrit ci-après.

Le dispositif de mesure 4 comporte de plus :

- un premier goniomètre non représenté susceptible de mesurer l'angle $\phi$ entre ledit faisceau laser émis L et la verticale, c'est-à-dire l'axe OZ du référentiel OXYZ, tel que représenté sur la figure 1 ; et
- un second goniomètre non représenté susceptible de mesurer l'angle $\alpha$ entre la projection dans le plan horizontal OXY du faisceau laser émis L et la direction OX, tel que représenté sur la figure 2.

Le dispositif de mesure 4 transmet par l'intermédiaire de la liaison 8 double les mesures effectuées, concernant ladite distance D et lesdits angles $\alpha$ et $\phi$, au calculateur 7 qui calcule à partir de ces informations les coordonnées (x, y, z) du point P considéré dans le référentiel OXYZ, en utilisant les relations suivantes :

$$x = D \times \sin\phi \times \cos\alpha$$

$$y = D \times \sin\phi \times \sin\alpha$$

$$z = D \times \cos\phi.$$

Le dispositif de mesure 4 et le calculateur 7 effectuent les opérations décrites précédemment pour une pluralité de points P du terrain 3. A partir des points ainsi déterminés, le calculateur 7 peut définir le profil dudit terrain 3.

On notera que, selon l'invention, ce relevé à distance du profil du terrain 3 peut être effectué, soit dans une étape préliminaire antérieure au déplacement de l'engin 2, durant laquelle l'engin 2 reste immobile dans sa position initiale représentée sur la figure 1, soit au cours du déplacement dudit engin 2 simultanément à l'ajustement de la position transversale.

Selon l'invention, ledit calculateur 7 connaît en outre la configuration de l'ouvrage que l'on envisage de réaliser conformément à un projet préétabli. A partir de cette configuration connue et enregistrée dans le calculateur 7 et à partir du profil relevé à distance, ledit calculateur 7 détermine la position transversale théorique que doit prendre l'engin 2 au cours de son déplacement lors de la réalisation de l'ouvrage.

Il suffit alors de commander ledit engin 2 de sorte qu'il se trouve toujours, lors de son déplacement, dans la position transversale théorique ainsi déterminée.

Pour ce faire, ledit capteur 5 effectue à des instants successifs des mesures permettant audit calculateur 7 de déterminer la position transversale effective de l'engin 2, ledit calculateur 7 commandant ensuite lesdits moyens de positionnement 6 pour qu'ils amènent, si ce n'est pas le cas, ledit engin 2 dans ladite position transversale théorique déterminée.

Afin d'améliorer la précision des mesures, il est possible d'agencer plusieurs capteurs sur l'engin, par exemple deux capteurs, l'un pouvant alors être monté à l'avant de l'engin et l'autre à l'arrière.

Pour effectuer les mesures, on associe audit capteur 5 un élément de matérialisation 13 présentant un support rectangulaire déroulable 13A posé sur ledit terrain, dans la direction d'avance de l'engin. Ledit support déroulable 13A doit, d'une part, être souple pour pouvoir épouser fidèlement le profil du terrain 3 et, d'autre part, être solide et lourd pour résister aux conditions atmosphériques rencontrées.

Ledit élément de matérialisation 13 comporte une bande longitudinale 14 réalisée en un matériau réfléchissant la lumière, de section transversale rectangulaire, agencée au centre dudit support déroulable 13A, et destinée à coopérer avec le capteur 5.

Conformément à l'invention, ledit capteur 5 comporte :

- une source laser non représentée, par exemple une diode laser de faible puissance munie d'une optique de focalisation cylindrique, émettant un faisceau laser 15 ; et
- une caméra vidéo non représentée, comportant de préférence un capteur à matrice photoréceptrice du type à dispositifs à transfert de charge, susceptible de détecter la partie du faisceau laser 15 émis par ladite source laser, qui est réfléchie par ladite bande réfléchissante 14 de l'élément de matérialisation 13 et de déterminer, en fonction de cette détection, la position transversale effective de l'engin 2, ladite source laser et ladite caméra vidéo étant agencées dans des positions fixes déterminées l'une par rapport à l'autre.

Ledit capteur 5 effectue les mesures selon un principe connu dit de profilométrie.

Ladite source laser est agencée de sorte que le plan 16 du faisceau laser émis 15 est perpendiculaire à ladite bande réfléchissante 14.

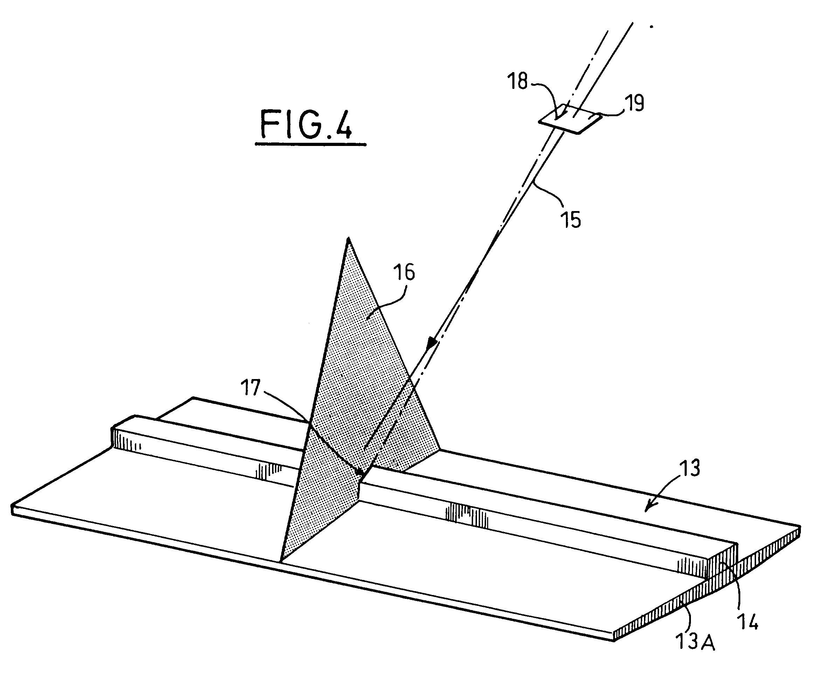

La caméra vidéo détecte alors après réflexion le segment d'intersection 17 entre ledit plan laser 16 et ladite bande réfléchissante 14. La position de l'image 18 dudit segment d'intersection 17 en ligne et colonne dans le plan de la matrice photoréceptrice 19 représentée schématiquement sur la figure 4, ladite position étant déterminée par traitement d'image, permet de déterminer la position transversale de l'engin 2, puisque ladite source laser et la caméra sont agencées dans des positions fixes déterminées l'une par rapport à l'autre.

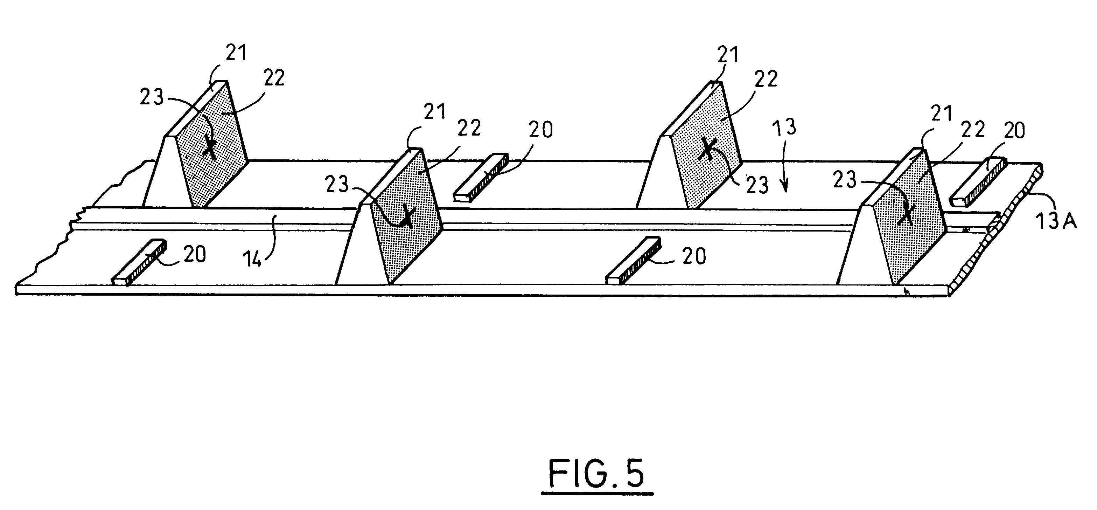

Ainsi, grâce audit capteur 5, on connaît la position transversale de l'engin 2, c'est-à-dire la position latérale et en hauteur, à l'endroit où il se trouve au moment de la mesure. Il est alors de plus nécessaire de déterminer l'avance de l'engin, c'est-à-dire la distance parcourue par ledit engin à partir d'une position de référence, par exemple la position initiale de la figure 1, de manière à connaître précisément l'endroit où il se trouve sur ladite trajectoire à parcourir. La mesure de l'avance est effectuée par ledit capteur 5 en coopération avec des repères 20 réalisés par exemple sous forme de plaquettes parallélépipédiques et agencés sur ledit élément de matérialisation 13, de part et d'autre de ladite bande réfléchissante 14, de façon régulièrement espacée, sous forme de deux rangées en quinconce, tel que représenté sur la figure 5.

Ledit capteur 5 signale donc le passage de l'engin au niveau de ces repères 20, ce qui permet audit calculateur 7 de déterminer l'avance dudit engin 2 et donc sa position sur ladite trajectoire.

Ledit élément de matérialisation 13 comporte de plus des cibles 21 présentant une face réfléchissante 22 munie d'un repère de centrage 23 et disposée en regard de l'engin 2, lesdites cibles 21 étant agencées latéralement auxdits repères 20 de façon symétrique par rapport à ladite bande réfléchissante 14, comme représenté sur la figure 5. Lesdites cibles réfléchissantes 21 sont utilisées par ledit télémètre 11 pour déterminer la distance de points P du terrain 3, lors du relevé à distance du profil du terrain, en renvoyant le faisceau lumineux L émis par ledit télémètre 11.

Ledit calculateur 7, connaissant ainsi la position transversale théorique et la position transversale effective de l'engin 2, commande alors les moyens de positionnement 6 susceptibles de déplacer ledit engin latéralement et en hauteur de manière à amener ledit engin 2 dans la position transversale théorique prescrite.

Dans le cadre de la présente invention, lesdits moyens de positionnement 6 peuvent être formés de tout dispositif susceptible de régler la position transversale de l'engin 2. Pour un engin mû par exemple par deux doubles chenilles montées respectivement à l'avant et à l'arrière dudit engin, comme cela est le cas pour de nombreux engins de travaux publics, lesdits moyens de positionnement 6 peuvent par exemple être constitués d'un dispositif à vérins.

L'ajustement de la position transversale proprement dit de l'engin 2, c'est-à-dire la détection de la position transversale effective et le positionnement approprié de l'engin, est effectué de façon répétitive au cours du déplacement dudit engin 2 lors de la réalisation de l'ouvrage envisagé.

Bien que, en regard des figures ci-dessus, on ait décrit un capteur pourvu d'une source laser, il va de soi que, selon une variante de réalisation, le capteur 5 pourrait être essentiellement composé d'une caméra dirigée vers la bande de matérialisation 13A, avec sa ligne rétroréfléchissante 14. Le positionnement horizontal serait effectué comme précédemment, par mesure de la position de la ligne 14 par rapport au référentiel de la matrice photosensible. De même, le passage des bandes lumineuses 20 permettrait de mesurer la distance parcourue.

La mesure de l'altitude du capteur par rapport à la surface de travail serait obtenue par l'évaluation de la taille de l'image de la ligne rétro réfléchissante. Celleci est en effet reliée géométriquement à la largeur de la ligne objet, à la distance focale de l'objectif de la caméra et à la distance caméra-sol. Par calcul, il est donc facile de trouver l'altitude cherchée.

Par rapport à la première disposition, cette seconde réalisation présente l'avantage de fournir une information supplémentaire, qui est l'orientation de la ligne objet par rapport au référentiel du capteur, qui est lui-même lié à celui de la machine et à sa direction de déplacement. Ceci est obtenu par l'analyse de la totalité de la ligne image, dans le sens longitudinal et non pas seulement de sa partie centrale.

Dans le cas de l'utilisation séparée des capteurs locaux, pour obtenir uniquement un guidage latéral de la machine, la bande déposée sur le sol serait simplifiée et ne comporterait pas les trièdres rétroréflecteurs.

Pour améliorer la visibilité de la ligne, cette dernière peut être revêtue d'une peinture rétroréfléchissante. Le capteur comporte alors une source d'éclairage auxiliaire.

## Revendications

1. Procédé pour ajuster la position transversale d'au moins une partie d'un engin mobile (2) destiné à réaliser un ouvrage sur un terrain (3) et se déplaçant à cet effet sur ledit terrain (3) suivant une trajectoire déterminée, procédé selon lequel :

   A/ on détermine une position transversale théorique de ladite partie de l'engin (2) ; et

B/ au cours dudit déplacement suivant ladite trajectoire déterminée, on ajuste la position transversale de ladite partie de l'engin (2) en effectuant de façon répétitive les opérations suivantes :

- on détecte la position transversale effective de ladite partie de l'engin (2) ; et
- on commande ladite partie de l'engin (2) de manière que sa position transversale effective corresponde à la position transversale théorique déterminée,

caractérisé en ce que, dans l'étape A/ :

a) on relève à distance le profil dudit terrain ; et
b) à partir de l'ouvrage que l'on envisage de réaliser et dudit profil relevé, on détermine la position transversale théorique que doit prendre ladite partie de l'engin lors de la réalisation dudit ouvrage au cours du déplacement dudit engin (2) suivant ladite trajectoire déterminée.

2. Procédé selon la revendication 1, caractérisé en ce que les opérations a) et b) sont effectuées lors d'une étape préliminaire avant le déplacement de l'engin.

3. Procédé selon la revendication 1, caractérisé en ce que les opérations a) et b) sont effectuées au cours du déplacement de l'engin.

4. Procédé selon l'une des revendications 1 à 3, caractérisé en ce que, pour relever à distance le profil du terrain (3), on détermine à distance dans un référentiel déterminé (OXYZ) les coordonnées (x, y, z) d'une pluralité de points de mesure (P) dudit terrain (3).

5. Procédé selon la revendication 4, caractérisé en ce que, pour déterminer à distance les coordonnées (x, y, z) d'un point de mesure (P) du terrain (3) dans un référentiel déterminé (OXYZ) :

a) on définit un point (O), dont les coordonnées sont connues dans ledit référentiel (OXYZ), comme point de référence ;
b) on détermine la distance D entre ledit point de mesure (P) et ledit point de référence (O) ;
c) on détermine l'angle $\phi$ que fait avec la verticale (OZ) la droite passant par ledit point de mesure (P) et ledit point de référence (O) ;
d) on détermine l'angle $\alpha$ que fait avec une direction horizontale déterminée (OX), dont les coordonnées sont connues dans ledit référentiel (OXYZ), la projection dans le plan horizontal (OXY) de la droite passant par ledit point de mesure (P) et ledit point de référence (O) ; et
e) à partir des coordonnées dudit point de référence (O), de ladite distance D et desdits angles $\phi$ et $\alpha$, on détermine les coordonnées (x, y, z) du point de mesure (P) dans ledit référentiel (OXYZ).

6. Procédé selon l'une des revendications 1 à 5, caractérisé en ce que, pour relever le profil du terrain (3), on dispose sur ledit terrain (3) un élément de matérialisation (13).

7. Procédé selon l'une des revendications 1 à 6, caractérisé en ce que, pour détecter la position transversale effective de l'engin (2), on dispose sur ledit terrain (3) un élément de matérialisation (13).

8. Procédé selon l'une des revendications 6 ou 7, caractérisé en ce que ledit élément de matérialisation (13) comporte une bande longitudinale réfléchissante (14).

9. Procédé selon la revendication 8, caractérisé en ce que ledit élément de matérialisation (13) comporte des cibles réfléchissantes (21) et des repères (20) agencés respectivement à équidistance le long de ladite bande longitudinale (14), latéralement à celle-ci.

10. Dispositif pour ajuster la position transversale d'au moins une partie d'un engin mobile (2) destiné à réaliser un ouvrage sur un terrain (3) et se déplaçant à cet effet sur ledit terrain (3) suivant une trajectoire déterminée, ledit dispositif comportant :

- un dispositif de mesure (4) susceptible d'effectuer des mesures permettant de déterminer la position transversale théorique de ladite partie de l'engin (2);
- au moins un capteur (5) susceptible d'effectuer des mesures permettant de déterminer la position transversale effective de ladite partie de l'engin (2);
- des moyens de positionnement (6) susceptibles d'effectuer le positionnement transversal de ladite partie de l'engin (2) ; et
- un calculateur (7) relié audit dispositif de mesure (4), audit capteur (5) et auxdits moyens de positionnement (6) et susceptible de commander les moyens de positionnement (6) de manière à faire correspondre la position transversale effective de ladite partie de l'engin (2) avec la position transversale théorique, au cours du déplacement de l'engin,

caractérisé en ce que ledit dispositif de mesure (4) effectue à distance des mesures relatives à des points de mesure (P) du terrain (3) et, en ce que ledit calculateur (7) connaît la configuration de l'ouvrage que l'on envisage de réaliser et est formé de manière à déterminer :

- à partir des mesures effectuées par ledit capteur (5), la position transversale effective de ladite partie de l'engin (2) ;
- à partir des mesures effectuées par ledit dispositif de mesure (4), les coordonnées (x,y,z) dans un référentiel déterminé (OXYZ) desdits points de mesure (P) ;
- à partir desdites coordonnées (x,y,z) des points de mesure (P), le profil dudit terrain ; et
- à partir de ladite configuration de l'ouvrage et dudit profil du terrain, la position transversale théorique que doit prendre ladite partie de l'engin (2) lors de la réalisation dudit ouvrage au cours du déplacement dudit engin (2) suivant ladite trajectoire déterminée.

**11.** Dispositif selon la revendication 10, caractérisé en ce que ledit dispositif de mesure (4) comporte un télémètre (11) et au moins un goniomètre.

**12.** Dispositif selon la revendication 11, caractérisé en ce que ledit télémètre (11) est réalisé sous forme d'un télémètre optique à rayonnement laser.

**13.** Dispositif selon l'une des revendications 11 ou 12, caractérisé en ce que ledit télémètre (11) et ledit goniomètre sont montés sur une plate-forme mobile (12) commandée par ledit calculateur (7).

**14.** Dispositif selon la revendication 13, caractérisé en ce que ladite plate-forme mobile (12) est orientable en site et en gisement.

**15.** Dispositif selon l'une des revendications 10 à 14, caractérisé en ce que ledit capteur (5) coopère avec un élément de matérialisation (13) disposé sur ledit terrain (3) et en ce que ledit capteur (5) comporte une caméra vidéo susceptible d'observer ledit élément de matérialisation (13) et de déterminer en fonction de cette observation la position transversale effective de ladite partie de l'engin (2).

**16.** Dispositif selon l'une des revendications 10 à 14, caractérisé en ce que ledit capteur (5) coopère avec un élément de matérialisation (13) disposé sur ledit terrain (3) et en ce que ledit capteur (5) comporte :

- une source laser susceptible d'émettre un faisceau laser (15); et
- une caméra vidéo susceptible de détecter le faisceau laser (15) émis par ladite source laser et réfléchi par ledit élément de matérialisation (13) et de déterminer en fonction de cette détection la position transversale effective de ladite partie de l'engin (2).

**17.** Dispositif selon la revendication 16, caractérisé en ce que ledit faisceau laser (15) est émis de manière à présenter un plan (16) perpendiculaire à une bande longitudinale réfléchissante (14) agencée sur ledit élément de matérialisation (13).

**18.** Dispositif selon l'une des revendications 15 à 17, caractérisé en ce que ladite caméra vidéo comporte un capteur présentant une matrice photoréceptrice.

**19.** Dispositif selon l'une quelconque des revendications 10 à 18, caractérisé en ce que les moyens de positionnement (6) comportent des vérins agencés sur l'engin et susceptibles de régler la position transversale de ladite partie de l'engin.

**Patentansprüche**

**1.** Verfahren zum Einstellen der transversalen Position wenigstens eines Teils einer fahrbaren Maschine (2), die dafür vorgesehen ist, auf einem Gelände (3) eine Arbeit auszuführen und sich zu diesem Zweck in dem Gelände (3) entsprechend eines bestimmten Weges zu bewegen, nach welchem:

A/ eine theoretische transversale Position des Teils der Maschine (2) bestimmt wird; und
B/ die transversale Position des Teils der Maschine (2) während der Bewegung entsprechend des bestimmten Weges eingestellt wird, indem die folgenden Operationen wiederholt ausgeführt werden:

- die tatsächliche transversale Position des Teils der Maschine (2) wird bestimmt; und
- der Teil der Maschine (2) wird derart gesteuert, dass seine tatsächliche transversale Position der bestimmten theoretischen transversalen Position entspricht,

dadurch gekennzeichnet, dass im Schritt A/:

a) das Profil des Geländes aus der Entfernung vermessen wird; und
b) ausgehend von der Arbeit, die auszuführen ins Auge gefasst wird, und vom vermessenen Profil die theoretische transversale Position bestimmt wird, die der Teil der Maschine bei der Ausführung der Arbeit während der Bewegung der Maschine (2) entsprechend des bestimmten Weges einnehmen muss.

**2.** Verfahren nach Anspruch 1, dadurch gekennzeichnet, dass die Operationen a) und b) in einem vorbereitenden Schritt vor der Bewegung der Maschine ausgeführt werden.

**3.** Verfahren nach Anspruch 1, dadurch gekennzeichnet, dass die Operationen a) und b) während der Bewegung der Maschine ausgeführt werden.

**4.** Verfahren nach einem der Ansprüche 1 bis 3, dadurch gekennzeichnet, dass zum Vermessen des Profils des Geländes (3) aus der Entfernung, in einem bestimmten Bezugssystem (OXYZ) die Koordinaten (x, y, z) einer Vielzahl von Messpunkten (P) des Geländes (3) aus der Entfernung bestimmt werden.

**5.** Verfahren nach Anspruch 4, dadurch gekennzeichnet, dass zum Bestimmen der Koordinaten (x, y, z) eines Messpunktes (P) des Geländes (3) in einem bestimmten Bezugssystem (OXYZ) aus der Entfernung:

a) ein Punkt (O), dessen Koordinaten im Bezugssystem (OXYZ) bekannt sind, als Bezugspunkt definiert wird;
b) der Abstand (D) zwischen dem Messpunkt (P) und dem Bezugspunkt (O) bestimmt wird;
c) der Winkel $\alpha$ bestimmt wird, den die durch den Messpunkt (P) und den Bezugspunkt (O) hindurchgehende Gerade mit der Vertikalen (OZ) bildet;
d) der Winkel $\alpha$ bestimmt wird, den die Projektion der durch den Messpunkt (P) und den Bezugspunkt (O) hindurchgehenden Geraden in der horizontalen Ebene (OXY) mit einer bestimmten horizontalen Richtung (OX) bildet, deren Koordinaten im Bezugssystem (OXYZ) bekannt sind; und
e) ausgehend von den Koordinaten des Bezugspunktes (O), dem Abstand D und den Winkeln $\phi$ und $\alpha$ die Koordinaten (x, y, z) des Messpunktes (P) in dem Bezugssystem (OXYZ) bestimmt werden.

**6.** Verfahren nach einem der Ansprüche 1 bis 5, dadurch gekennzeichnet, dass zum Vermessen des Profils des Geländes (3) ein Markierungselement (13) auf dem Gelände (3) angeordnet wird.

**7.** Verfahren nach einem der Ansprüche 1 bis 6, dadurch gekennzeichnet, dass zum Erfassen der tatsächlichen transversalen Position der Maschine (2) ein Markierungselement (13) auf dem Gelände (3) angeordnet wird.

**8.** Verfahren nach einem der Ansprüche 6 oder 7, dadurch gekennzeichnet, dass das Markierungselement (13) ein in Längsrichtung verlaufendes reflektierendes Band (14) umfasst.

**9.** Verfahren nach Anspruch 8, dadurch gekennzeichnet, dass das Markierungselement (13) reflektierende Ziele (21) und Markierungen (20) umfasst, die entlang des in Längsrichtung verlaufenden Bandes (14) seitlich von diesem jeweils mit gleichem Abstand angeordnet sind.

**10.** Vorrichtung zum Einstellen der transversalen Position wenigstens eines Teils einer fahrbaren Maschine (2), die dafür vorgesehen ist, eine Arbeit auf einem Gelände (3) auszuführen und sich zu diesem Zweck auf dem Gelände (3) entsprechend eines bestimmten Weges zu bewegen, wobei die Vorrichtung umfasst:

- eine Messeinrichtung (4), die fähig ist, Messungen auszuführen, die gestatten, die theoretische transversale Position des Teils der Maschine (2) zu bestimmen;
- wenigstens einen Sensor (5), der fähig ist, Messungen auszuführen, die gestatten, die tatsächliche transversale Position des Teils der Maschine (2) zu bestimmen;
- Mittel (6) zur Positionierung, die fähig sind, die transversale Positionierung des Teils der Maschine (2) auszuführen; und
- einen Rechner (7), der mit der Messeinrichtung (4), dem Sensor (5) und den Mitteln (6) zur Positionierung verbunden ist und fähig ist, die Mittel (6) zur Positionierung derart zu steuern, dass sie während der Bewegung der Maschine die tatsächliche transversale Position des Teils der Maschine (2) der theoretischen transversalen Position entsprechen lassen,

dadurch gekennzeichnet, dass die Messeinrichtung (4) Messungen bezüglich Messpunkten (P) des Geländes (3) aus der Entfernung ausführt und dass der Rechner (7) die Konfiguration der Arbeit, die auszuführen ins Auge gefasst wird, kennt und derart gestaltet ist, dass er bestimmt:

- ausgehend von den vom Sensor (5) ausgeführten Messungen die tatsächliche transversale Position des Teils der Maschine (2);
- ausgehend von den von der Messvorrichtung (4) ausgeführten Messungen die Koordinaten (x, y, z) der Messpunkte (P) in einem bestimmten Bezugssystem (OXYZ);
- ausgehend von den Koordinaten (x, y, z) der Messpunkte . (P) das Profil des Geländes; und
- ausgehend von der Konfiguration der Arbeit und dem Profil des Geländes die theoretische transversale Position, die der Teil der Maschine (2) bei der Ausführung der Arbeit während der Bewegung der Maschine (2) entsprechend des bestimmten Weges einnehmen muss.

**11.** Vorrichtung nach Anspruch 10, dadurch gekennzeichnet, dass die Messeinrichtung (4) einen Entfernungsmesser (11) und wenigstens ein Goniometer umfasst.

**12.** Vorrichtung nach Anspruch 11, dadurch gekennzeichnet, dass der Entfernungsmesser (11) in Form eines optischen Entfernungsmessers mit Laserstrahlung ausgeführt ist.

**13.** Vorrichtung nach einem der Ansprüche 11 oder 12, dadurch gekennzeichnet, dass der Entfernungsmesser (11) und das Goniometer auf einer beweglichen Plattform (12) angebracht sind, die von Rechner (7) gesteuert wird.

**14.** Vorrichtung nach Anspruch 13, dadurch gekennzeichnet, dass die bewegliche Plattform (12) in ihrer Winkellage und in ihrer Seitenpeilung einstellbar ist.

**15.** Vorrichtung nach einem der Ansprüche 10 bis 14, dadurch gekennzeichnet, dass der Sensor (5) mit einem Markierungselement (13) zusammenarbeitet, das im Gelände (3) angeordnet ist, und dass der Sensor (5) eine Videokamera umfasst, die fähig ist, das Markierungselement (13) zu beobachten und in Abhängigkeit von dieser Beobachtung die tatsächliche transversale Position des Teils der Maschine (2) zu bestimmen.

**16.** Vorrichtung nach einem der Ansprüche 10 bis 14, dadurch gekennzeichnet, dass der Sensor (5) mit einem Markierungselement (13) zusammenarbeitet, das im Gelände (3) angeordnet ist, und dass der Sensor (5) aufweist:

- eine Laserquelle, die fähig ist, einen Laserstrahl (15) auszusenden; und
- eine Videokamera, die fähig ist, den von der Laserquelle ausgesendeten und vom Markierungselement (13) reflektierten Laserstrahl (15) zu erfassen und in Abhängigkeit von dieser Erfassung die tatsächliche transversale Position des Teils der Maschine (2) zu bestimmen.

**17.** Vorrichtung nach Anspruch 16, dadurch gekennzeichnet, dass der Laserstrahl (15) derart ausgesendet wird, dass er eine zu einem in Längsrichtung verlaufenden reflektierenden Band (14), das am Markierungselement (13) angeordnet ist, senkrechte Ebene (16) aufweist.

**18.** Vorrichtung nach einem Ansprüche 15 bis 17, dadurch gekennzeichnet, dass die Videokamera einen Sensor umfasst, der eine Photorezeptormatrix aufweist.

**19.** Vorrichtung nach einem der Ansprüche 10 bis 18, dadurch gekennzeichnet, dass die Mittel (6) zur Positionierung Zylinder umfassen, die an der Maschine angeordnet und fähig sind, die transversale Position des Teils der Maschine einzustellen.

**Claims**

**1.** Method of adjusting the transverse position of at least one part of a moving machine (2) adapted to construct a structure on a terrain (3) and to this end moving over said terrain (3) along a particular path, in which method:

A/ a theoretical transverse position of said part of said machine (2) is determined; and
B/ during said displacement along said particular path, said transverse position of said part of said machine (2) is adjusted by carrying out the following operations repetitively:

- the actual transverse position of said part of said machine (2) is detected; and
- said part of said machine (2) is commanded so that its actual transverse position corresponds to the particular theoretical transverse position,

characterized in that, in step A/:

a) the profile of said terrain is remotely sensed; and
b) the required theoretical transverse position of said part of the machine during the construction of said structure as said machine (2) moves along said particular path is determined on the basis of the structure to be constructed and said sensed profile.

**2.** Method according to claim 1 characterized in that operations a) and b) are carried out during a preliminary step before said machine moves.

**3.** Method according to claim 1 characterized in that operations a) and b) are carried out while said machine is moving.

**4.** Method according to any one of claims 1 to 3 characterized in that, to perform the remote sensing of said profile of said terrain (3), the coordinates (x, y, z) of a plurality of measurement points (P) of said terrain (3) in a particular frame of reference (OXYZ) are remotely determined.

**5.** Method according to claim 4 characterized in that, for remote determination of the coordinates (x, y, z) of a measurement point (P) of said terrain (3) in a particular frame of reference (OXYZ) :

a) a point (O) whose coordinates are known in said frame of reference (OXYZ) is defined as a reference point;

b) the distance D between said measurement point (P) and said reference point (O) is determined;

c) the angle $\phi$ between the vertical (OZ) and a straight line segment passing through said measurement point (P) and said reference point (O) is determined;

d) the angle $\alpha$ between a particular horizontal direction (OX), the coordinates of which are known in said frame of reference (OXYZ), and the projection into the horizontal plane (OXY) of said straight line segment passing through said measurement point (P) and said reference point (O) is determined; and

e) the coordinates (x, y, z) of said measurement point (P) in said frame of reference (OXYZ) are determined from the coordinates of said reference point (O), from said distance D and from said angles $\phi$ and $\alpha$.

6. Method according to any one of claims 1 to 5 characterized in that, to sense said profile of said terrain (3), a materialization member (13) is disposed on said terrain (3).

7. Method according to any one of claims 1 to 6 characterized in that, to detect said actual transverse position of said machine (2), a materialization member (13) is disposed on said terrain (3).

8. Method according to either claim 6 or claim 7 characterized in that said materialization member (13) includes a reflective longitudinal strip (14).

9. Method according to claim 8 characterized in that said materialization member (13) includes reflective targets (21) and markers (20) equidistantly disposed along said longitudinal strip (14), laterally thereof.

10. Device for adjusting the transverse position of at least one part of a moving machine (2) adapted to construct a structure on a terrain (3) and to this end moving over said terrain (3) along a particular path, said device including:

- a measuring device (4) adapted to carry out measurements to determine the theoretical transverse position of said part of the machine (2);
- at least one sensor (5) adapted to carry out measurements to determine the actual transverse position of said part of the machine (2);

- positioning means (6) adapted to carry out the transverse positioning of said part of the machine (2); and
- a computer (7) connected to said measuring device (4), to said sensor (5) and to said positioning means (6) and adapted to control the positioning means (6) to make the actual transverse position of said part of the machine (2) correspond to the theoretical transverse position during the movement of the machine,

characterized in that said measuring device (4) carries out remotely measurements relating to measurement points (P) of the terrain (3) and in that said computer (7) knows the configuration of the structure to be constructed and is adapted to determine:

- from measurements carried out by said sensor (5), the actual transverse position of said part of the machine (2);
- from measurements carried out by said measuring device (4), the coordinates (x,y,z) in a particular system of axes (OXYZ) of said measurement points (P);
- from said coordinates (x,y,z) of the measurement point (P), the profile of said terrain; and
- from said configuration of the structure and said profile of the terrain, the theoretical transverse position that said part of the machine (2) must adopt during the construction of said structure during the movement of said machine (2) along said determined path.

11. Device according to claim 10 characterized in that said measuring device (4) includes a rangefinder (11) and at least one direction finder.

12. Device according to claim 11 characterized in that said rangefinder (11) is in the form of a laser optical rangefinder.

13. Device according to either claim 11 or claim 12 characterized in that said rangefinder (11) and said direction finder are mounted on a mobile platform (12) controlled by said computer (7).

14. Device according to claim 13 characterized in that said mobile platform (12) can be oriented in elevation and in bearing.

15. Device according to any one of claims 10 to 14 characterized in that said sensor (5) cooperates with a materialization member (13) disposed on said terrain (3) and in that said sensor (5) includes a video camera adapted to observe said materialization member (13) and to determine on the basis of such observation said actual transverse position of said part of said machine (2).

16. Device according to any one of claims 10 to 14 characterized in that said sensor (5) cooperates with a materialization member (13) disposed on said terrain (3) and in that said sensor (5) includes:

   - a laser source adapted to emit a laser beam (15); and
   - a video camera for detecting the laser beam (15) emitted by said laser source and reflected by said materialization member (13) and for determining accordingly said actual transverse position of said part of said machine (2).

17. Device according to claim 16 characterized in that said laser beam (15) has a plane (16) perpendicular to a reflective longitudinal strip (14) on said materialization member (13).

18. Device according to any one of claims 15 to 17 characterized in that said video camera includes a sensor having a photoreceptive matrix.

19. Device according to any one of claims 10 to 18 characterized in that said positioning means (6) include rams on said machine adapted to adjust said transverse position of said part of said machine.

FIG.1

## FIG.2

## FIG.3

FIG.4

EP 0 774 545 B1

FIG.5